# EUROPÄISCHE PATENTSCHRIFT

(11) **EP 0 761 150 B1**
(45) Veröffentlichungstag und Bekanntmachung des Hinweises auf die Patenterteilung: **29.12.1999**
(21) Anmeldenummer: 96810564.3
(22) Anmeldetag: 27.08.1996
(51) Int. Cl.: A47J 31/44

(54) **Kaffeemaschine**
Coffee machine
Machine à café

(30) Priorität: 30.08.1995 CH 246695
(43) Veröffentlichungstag der Anmeldung: 12.03.1997
(73) Patentinhaber: THERMOPLAN AG, CH-6353 Weggis (CH)
(72) Erfinder: In-Albon, Jean-Paul, 1957 Ardon (CH)
(74) Vertreter: Luchs, Willi

(56) Entgegenhaltungen:
- EP-A- 0 158 579
- WO-A-93/07792
- CH-A- 682 798
- DE-U- 7 032 933
- FR-A- 2 312 998

## Beschreibung

Die Erfindung betrifft eine Kaffeemaschine, mit einem Gehäuserahmen, in welchen wenigstens eine Extraktionsvorrichtung zur Erzeugung des Kaffees, eine elektronische Steuereinheit, eine Wasserversorgung und eine Schublade zum Auffangen des Kaffeesatzes einbaubar ist.

Bei einer gattungsmässigen Kaffeemaschine gemäss der Patentschrift EP-B1 0 299 399 ist in einem Gehäuse ein sogenannter Systemeinschub leicht auswechselbar eingebaut, wobei dieser Systemeinschub ein kastenförmiges Gestell aufweist, welches auf Schienenführungen in das Gehäuse einschiebbar ist und auf diesem eine Extraktionsvorrichtung zur Erzeugung des Kaffees, eine Schublade zum Auffangen der Kaffeesatzportionen, eine Heiswasseraufbereitungsanlage, Bedienungselemente sowie weitere Komponenten, wie zum Beispiel eine Kaffeemühle oder eine Portionierungseinrichtung, angebracht sind. Dieser Systemeinschub ermöglicht zwar ein Einschieben und Herausnehmen sämtlicher Komponenten zusammen in das oder aus dem Gehäuse. Nachteilig hierbei ist jedoch, dass die Verbindungsschläuche und die elektrischen Verbindungskabel zwischen den genannten Komponenten in relativ aufwendiger Montage miteinander verbunden bzw. bei einer Demontage umständlich voneinander gelöst werden müssen.

Aufgabe der vorliegenden Erfindung besteht demgegenüber darin, eine Kaffeemaschine nach der eingangs beschriebenen Gattung derart weiterzubilden, dass sie äusserst einfach aufgebaut ist und eine schnelle Montage wie auch beispielsweise bei einem Defekt eine einfache Demontage und ein schnelles Erkennen und Auswechseln des defekten Maschinenteils zulässt.

Erfindungsgemäss ist die Aufgabe dadurch gelöst, dass mehrere unabhängig voneinander ausgebildete Module vorgesehen sind, die in den Gehäuserahmen einschiebbar angeordnet sind und je auf der Rückseite wenigstens einen Steckerteil aufweisen, welcher jeweils im eingeschobenen Zustand mit einem korrespondierenden Steckerteil im Gehäuserahmen gekoppelt ist, wobei diese Steckerteile im Gehäuserahmen über Kabel oder Leitungen in entsprechender Weise miteinander verbunden sind.

Mit dieser erfindungsgemässen Ausbildung der Kaffeemaschine ist eine konstruktiv absolut einfache Lösung erzielt worden, mittels der eine unabhängige Herstellung der einzelnen Module und aufgrund der modularen Bauweise ein äusserst einfacher Zusammenbau derselben ermöglicht ist. Im weiteren kann ein Benutzer ein defektes Modul auswechseln, ohne dass ein Fachmann beigezogen werden muss.

Weitere vorteilhafte Merkmale der Erfindung sind in den abhängigen Ansprüchen angegeben.

Ausführungsbeispiele der Erfindung sowie weitere Vorteile derselben sind nachfolgend anhand der Zeichnung näher erläutert. Es zeigt:
- Fig.1: eine schematische perspektivische Darstellung des Gehäuserahmens einer erfindungsgemässen Kaffeemaschine,
- Fig.2: die einzelnen, in den Gehäuserahmen einschiebbaren Module in perspektivischer Darstellung,
- Fig.3: eine Ansicht der Frontseite der erfindungsgemässen Kaffeemaschine und
- Fig.4: eine Seitenansicht der erfindungsgemässen Kaffeemaschine.

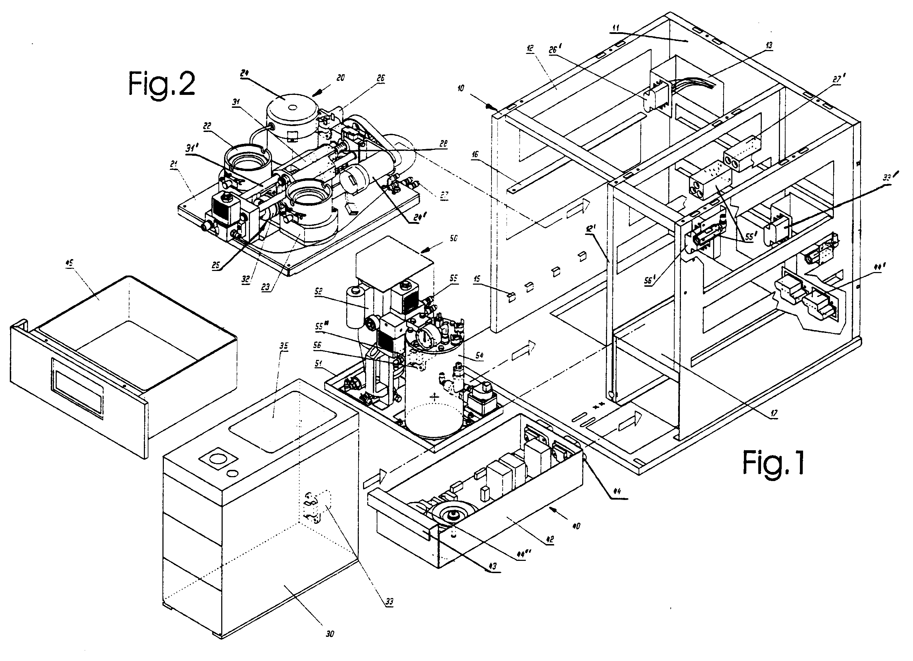

Fig.1 zeigt einen Gehäuserahmen 10 einer Kaffeemaschine, welcher ein Traggestell 12, eine Rückwand 11, mehrere, nachfolgend näher beschriebene Steckerteile sowie ein diese verbindenden Kabelkanal 13 umfasst. Das Traggestell 12 ist dabei auf der Frontseite offen, indessen hinten ist an ihm die Rückwand 11 befestigt und zudem bildet es zwei äussere seitliche Wände sowie eine zwischen diesen angeordnete Zwischenwand 12 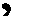 . Die eine Aussenwand und die Zwischenwand 12 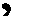 sind mit horizontal ausgerichteten Führungsleisten 15, 16 versehen, indessen andernteils ein Zwischenboden 17 vorgesehen ist.

Mit dieser Ausbildung des Gehäuserahmens 10 wie auch aufgrund seiner Dimensionierung können in diesen auf erfindungsgemässe Weise unabhängig voneinander ausgebildete Module ein- oder herausgeschoben werden, die in Fig.2 einzeln dargestellt sind.

Die zur Erzeugung des Kaffees dienende Extraktionsvorrichtung 20 ist von ihrem Prinzip her in der eingangs erwähnten Druckschrift EP-B1 0 299 399 ausführlich erläutert und daher nachfolgend nicht mehr in jedem Detail dargelegt. Sie ist auf einem Tragblech 21 befestigt und umfasst eine Kolben/Zylinder-Einheit 25, zwei Mühlen 22, 23, ein Antriebsorgan 24 zum Mahlen der Kaffeebohnen sowie an der Rückseite des Tragrahmens 21 positionierte Steckerteile 26, 27, welche dazu bestimmt sind, zum einen eine elektrische Verbindung und zum andern einen Wasseranschluss mit einem Ein- und einem Auslass mit dieser Extraktionsvorrichtung 20 herzustellen. Ferner ist ein Motor 24 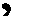 für den Antrieb des den Brühzylinder 31 verstellenden Gewindespindel 28 vorgesehen.

Die Kolben/Zylinder-Einheit 25 besteht aus einem stirnseitig offenen, an Führungsstangen 31' längsverschiebbar geführten Brühzylinder 31 und zwei in diesem geführte Kolben 32 mit je einer Kolbenstange, wobei der eine Kolben 32 feststehend bei der offenen Stirnseite des Brühzylinders angeordnet ist, währenddem der andere über einen definierten Hub bewegbar ist. Dem Brühzylinder 31 sind überdies seitlich zwei gegenüberliegende Öffnungen zugeordnet, welche mit einer jeweiligen Mühle korrespondieren.

Bei der Erzeugung von Kaffee wird der Brühzylinder 31 von dem Antriebsorgan 24 in eine Position gebracht, bei der dieser einen von den Kolben begrenzten Hohlraum bildet, in welchen über die eine seitliche Öffnung gemahlener Kaffee in einer definierten Portion eingefüllt wird. In der Folge wird der Zylinder 31 unter Mitnahme des beweglichen Kolbens gegen den feststehenden Kolben 32 hin bewegt. Dadurch wird der Hohlraum bis zu einem vorbestimmten Mass verkleinert und dabei die in diesem befindliche Kaffeeportion zusammengepresst. In dieser Stellung wird durch den einen Kolben brühendes Wasser in den Hohlraum und demzufolge durch den portionierten Kaffee gepumpt und nachfolgend wird der damit erzeugte Kaffee durch den andern Kolben zu einem Auslass der Kaffeemaschine befördert. Danach wird der Brühzylinder 31 und nach einer gewissen Distanz auch der bewegliche Kolben wieder zurückverschoben und zwar bis letzterer das offene Zylinderende erreicht und der feststehende Kolben 32 aus dem Zylinder herausbewegt worden ist. Dadurch wird die verbrauchte Kaffeesatzportion ausgestossen und in den unterhalb diesem Zylinder 31 befindlichen Auffangbehälter 45 geleert. Anschliessend wird der Zylinder 31 wieder in die Ausgangsposition zurückgefahren.

Die ein Modul bildende elektronische Steuereinheit 40 mit elektronischen Elementen 44'', welche nicht im Detail erläutert sind, ist in einer Schublade 42 mit einem frontseitig angeordneten Handgriff 43 untergebracht. Auf der Rückseite sind wiederum Steckerteile 44 vorgesehen. Im weiteren ist diese Steuereinheit 40 über einen Hauptschalter mit einem nicht näher gezeigten Netzanschluss verbunden. Mit ihr wird die gesamte Kaffeemaschine gesteuert, auf das nachfolgend noch näher eingegangen ist.

Die Heisswasser- und Dampfversorgung 50 als weiteres unabhängiges Modul ist ebenfalls auf einem Tragblech 51 angeordnet. Sie weist eine Wasserpumpe 52 sowie einen aufheizbaren Wasserbehälter 54 (Boiler) auf. Im weiteren sind ihr ein elektrischer Steckerteil 56 und ein Steckerteil 55 mit Ein- und Ausgängen für den Wasseranschluss an der Rückseite des Tragblechs 51 zugeordnet. Der Stekkerteil 55 wie auch derjenige Steckerteil 27 der Vorrichtung 20 enthalten jeweils ein nicht näher gezeigtes Ventil, welches eine Schliessung der im Steckerteil 55, 27 vorgesehenen Durchgangsöffnung bewirkt, wenn dieser nicht gesteckt ist. Dadurch ist sichergestellt, dass beim Herausziehen dieses Moduls das gegebenenfalls im Behälter 54 befindliche Wasser nicht ausfliesst. Die Wasserpumpe 52 saugt von einer an die Kaffeemaschine angeschlossenen Leitung Wasser an und pumpt dieses in den Boiler und nach dessen Erhitzung entweder zur Extraktionsvorrichtung 20 oder aber direkt zu einem Auslass an der Kaffeemaschine, mittels dem Heisswasser für Tee oder dergleichen entnommen werden kann. Es ist zu diesem Zwecke ein zusätzlicher Steckerteil 55 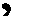 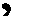 auf der Vorderseite der Wasserversorgung 50 vorgesehen, der über einen nicht näher veranschaulichten Schlauch mit einem Auslasshahnen 61 gekoppelt ist. Für den Auslass von Dampf ist diese Heisswasserversorgung 50 mit einem weiteren Auslass 62 verbunden.

Als weiteres unabhängiges Modul ist bei der erfindungsmässigen Kaffeemaschine eine Einrichtung 30 zur Erzeugung von Milchschaum vorgesehen, welche auf der Rückseite einen Steckerteil 33 hat. Ansonsten ist sie ebenfalls nur symbolisch dargestellt, denn der Aufbau und die Funktionsweise derselben kann aus der Druckschrift EP-A1 0 600 826 entnommen werden. Vom Prinzip her wird in einen mit einem Deckel versehenen Behälter 35 Milch eingefüllt, die darin erhitzt und über eine Ansaugleitung zusammen mit einer separaten Luftzufuhr von einer Pumpe angesogen, durch ein Widerstandsdurchlasselement gedrückt und in dem dadurch erzeugten schaumigen Zustand in eine Auslasskammer und folglich in eine Kaffeetasse oder dergleichen geleert. Diese Einrichtung 30 ist daher zweckmässigerweise mittels eines nicht näher gezeigten Schlauches mit einem Auslass 60 an der Frontseite der Kaffeemaschine verbunden.

Diese oben erläuterten Module werden jeweils unabhängig voneinander an der betreffenden Stelle in den Gehäuserahmen 10 eingeschoben. Die Extraktionsvorrichtung 20 wird auf den Führungsleisten 16 soweit nach hinten gestossen, bis dass deren beide Steckerteile 26, 27 in die korrespondierenden Steckerteile 26', 27' an der Rückwand 11 gesteckt sind. Auf dieselbe Weise wird das Modul der Heisswasserversorgung 50 unterhalb der Vorrichtung 20 mit den Steckerteilen 55', 56' gekoppelt, neben dieser die Steuereinheit 40 mit dem Stekkerteil 44' und oberhalb letzterer die Einrichtung 30 mit dem Stekkerteil 33'. Als letztes wird vor der Heisswasserversorgung 50 ein Auffangbehälter 45 eingeschoben, welcher unterhalb der Kolben/Zylinder-Einheit 25 plaziert ist, um die von letzterer ausgestossenen Kaffeesatz-Portionen auffangen zu können. Vorzugsweise ist fernerhin ein nicht dargestellter Mikroschalter im Gehäuserahmen 10 eingebaut, welcher von dem Behälter 45 in eingeschobenem Zustand eingeschaltet wird, damit nur in dieser Behälterposition Kaffee erzeugt werden kann. Die genannten Steckerteile an der Rückwand 11 des Gehäuserahmens 10 sind an Kabel bzw. Schläuche angeschlossen, die in dem Kabelkanal 13 geführt sind. Es ist hierbei nicht mehr im einzelnen dargetan, wie die Module miteinander verkabelt sind. Jedenfalls werden von der Steuereinheit 40 die entsprechenden Steuerbefehle auf die andern Module übertragen.

Die beiden Steckerteile 26' und 56' sind im übrigen bezüglich der senkrecht zur Steckrichtung verlaufenden Ebene schwimmend im Gehäuserahmen gelagert. Sie müssen daher zu den jeweiligen Stekkerteilen 27', 55' nicht genau positioniert sein. Beim Einstecken der Vorrichtung 20 bzw. der Heisswasserversorgung 50 ist damit gewährleistet, dass die jeweiligen beiden Steckerteile 26, 27 bzw. 56, 55 der Module, die überdies vorne konisch ausgebildet sind, problemlos in den dazugehörigen Steckerteilen zentriert und eingesteckt werden können.

Ein weiterer Vorteil mit dieser erfindungsgemässen Ausbildung der Kaffeemaschine ergibt sich, als die einzelnen Module und insbesondere die elektronische Steuereinheit 40 vor dem Zusammenbau unabhängig voneinander ausgetestet werden können, womit allfällige Fehler frühzeitig erkannt werden und bei der fertig montierten Kaffeemaschine daher kaum mehr Funktionsstörungen auftreten.

Darüberhinaus sind im Rahmen der Erfindung die einzelnen Module auf Tragblechen 21, 51, Schubladen 42 oder dergleichen gehalten, welche eine solche Auflagefläche bilden, dass die auf diesen angeordneten Komponenten, wie zum Beispiel der Brühzylinder 31, die Mühlen 22 und der Motor 24 der Extraktionsvorrichtung im Wesentlichen nebeneinander in übersichtlicher Anordnung befestigbar sind. Damit können bei einem allfälligen Defekt der Maschine die Module unabhängig voneinander einfach und schnell ausgebaut und einzelne Teile der Module, wie bspw. ein Motor, aufgrund der übersichtlichen Anordnung dieser Module ebenfalls problemlos ausgewechselt werden.

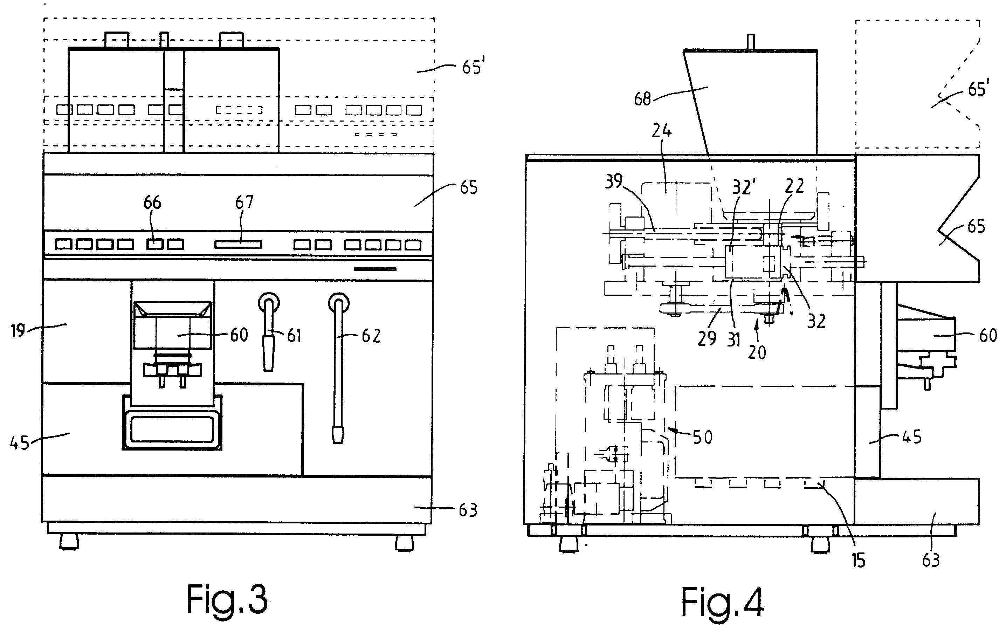

Fig.3 und Fig.4 zeigen die zusammengebaute Kaffeemaschine frontseitig bzw. in Seitenansicht. Nachdem die Module in den Gehäuserahmen eingebaut sind, wird letzterer mit einem Chassis und frontseitig mit einem Gehäusedeckel 19 und einem höhenverstellbaren Bedienungspanel 65 geschlossen, wobei damit die einzelnen Module gegen ein Verschieben gesichert sein sollen. Das an der oberen Frontseite angeordnete Bedienungspanel 65 weist verschiedene Drucktasten 66 auf, mittels denen die Maschine in herkömmlicher Weise wunschgemäss bedient werden kann. Die Drucktasten 66 sind dabei über einen nicht gezeigten Kabelstrang mit der Steuereinheit 40 verbunden und vermitteln dieser je nach Tastendruck einen entsprechenden Steuerbefehl. Ferner ist ein Display 67 in diesem Panel 65 angeordnet, welcher dem Benützer stets die aktuelle Funktion, bspw. "Kaffee bereit", anzeigt. Durch den höhenverstellbaren Auslasskopf 60 kann der von der Extraktionsvorrichtung 20 gefertigte Kaffee in eine unter diesen gestellte Tasse und bei entsprechender Wahl zum andern der von der Einrichtung 30 erzeugte Milchschaum ausgelassen werden. Zudem sind Auslasshahnen 61 und 62 für das Entnehmen von heissem Wasser bzw. von Wasserdampf vorgesehen. Ferner ist unterhalb diesen Auslässen ein Sockel 63 vorzugsweise mit einem wegnehmbaren Auffangbecken für einen allfälligen Abfluss von Restkaffee oder Wasser angeordnet.

Das sich über die gesamte Länge des Gehäuserahmens erstreckende Bedienungspanel 65 kann im Rahmen der Erfindung über nicht näher gezeigte, im Gehäuserahmen längsgeführte Führungsstangen in die strichlinierte Position 65' hochgeschoben werden, damit die Module, namentlich die Extraktionsvorrichtung 20 sowie die Einrichtung 30, von der Vorderseite einschiebbar bzw. herausnehmbar sind. Vorteilhaft kann dieses Panel 65 in der gezeigten Betriebs- bzw. Montagestellung 65' über nicht dargestellte Mittel arretiert werden.

Fig.4 zeigt ferner die eingeschobenen Module in dünneren strichlinierten Linien. In der oberen Hälfte der Kaffeemaschine ist die Extraktionsvorrichtung 20 angeordnet. Bei dieser ist oberhalb der Mühle 22 ein Vorratsbecher 68 aufgesteckt, in welchen Kaffeebohnen einfüllbar sind. Die Mühle 22 ist über einen Zahnriemen 29 oder dergleichen vom Motor 24 angetrieben. Im weiteren sind die beiden Kolben 32 und 32' ersichtlich, welche den Zylinder 31 in der dargestellten Position schliessen.

Selbstverständlich könnte die Erfindung in anderen Varianten dargetan werden. So könnten zum Beispiel nur zwei oder drei Module oder aber noch mehr Module als dargestellt in einer Kaffeemaschine integriert sein.

## Patentansprüche

1. Kaffeemaschine, mit einem Gehäuserahmen (10), in welchem wenigstens eine Extraktionsvorrichtung (20) zur Erzeugung des Kaffees, eine elektronische Steuereinheit (40), eine Wasserversorgung (50) und eine Schublade (45) zum Auffangen des Kaffeesatzes einbaubar ist, dadurch gekennzeichnet, dass
mehrere unabhängig voneinander ausgebildete Module vorgesehen sind, die in den Gehäuserahmen (10) einschiebbar angeordnet sind und je auf der Rückseite wenigstens einen Steckerteil (26,27, 44,55,56) aufweisen, welcher jeweils im eingeschobenen Zustand mit einem korrespondierenden Steckerteil (26',27',44',55',56') im Gehäuserahmen (10) gekoppelt ist, wobei diese Steckerteile im Gehäuserahmen über Kabel oder Leitungen in entsprechender Weise miteinander verbunden sind.

2. Kaffeemaschine nach Anspruch 1, dadurch gekennzeichnet, dass die Extraktionsvorrichtung (20), die elektronische Steuereinheit (40) sowie die Heisswasserversorgung (50) je ein unabhängiges Modul bilden.

3. Kaffeemaschine nach Anspruch 1 oder 2, dadurch gekennzeichnet, dass im Gehäuserahmen (10) überdies eine Einrichtung (30) als weiteres unabhängiges Modul einschiebbar ist, mit welcher Milchschaum erzeugbar ist, die zusammen mit Kaffee aus einem an der Frontseite des Gehäuserahmens (10) angeordneten Auslasskopf (60) entnehmbar ist.

4. Kaffeemaschine nach einem der Ansprüche 1 bis 3, dadurch gekennzeichnet, dass der Gehäuserahmen (10) an der Frontseite eine abdeckbare Öffnung aufweist und diese Module unabhängig voneinander von der Frontseite bis zu den Steckerteilen (26',27',44',55',56') in der Rückwand (11) des Gehäuserahmens (10) einschiebbar sind.

5. Kaffeemaschine nach Anspruch 4, dadurch gekennzeichnet, dass ein Bedienungspanel (65) vorgesehen ist, welches in Betriebsstellung an der Frontseite der Kaffeemaschine arretiert ist und für das Herausschieben der Module in eine oberhalb des Gehäuserahmens (10) befindliche Position (65') verschiebbar ist.

6. Kaffeemaschine nach einem der vorhergehenden Ansprüche, dadurch gekennzeichnet, dass die Steckerteile (26',56') bezüglich der senkrecht zur Steckrichtung verlaufenden Ebene schwimmend im Gehäuserahmen (10) gelagert sind und die mit diesen korrespondierenden Steckerteilen (26,56) der Vorrichtung (20) bzw. der Heisswasserversorgung (50) für ein einwandfreies Zentrieren derselben vorne konisch ausgebildet sind.

7. Kaffeemaschine nach einem der vorhergehenden Ansprüche, dadurch gekennzeichnet, dass in der Rückwand (11) des Gehäuserahmens (10) ein Kabelkanal (13) vorgesehen ist, in welchem die Kabel und Leitungen für die entsprechenden Verbindungen zwischen den Steckerteilen (26',27',44',55',56') angeordnet sind.

8. Kaffeemaschine nach einem der vorhergehenden Ansprüche, dadurch gekennzeichnet, dass ein Auffangbehälter (45) in den Gehäuserahmen einschiebbar ist, welcher unterhalb einer Kolben/Zylinder-Einheit (25) der Vorrichtung (20) plaziert ist.

9. Kaffeemaschine nach einem der vorhergehenden Ansprüche, dadurch gekennzeichnet, dass die einzelnen Module auf Tragblechen (21, 51) oder dergleichen gehalten sind, welche eine solche Auflagefläche bilden, dass die auf diesen angeordneten Komponenten im Wesentlichen nebeneinander in übersichtlicher Anordnung befestigbar sind.

## Claims

1. Coffee machine with a housing frame (10), in which can be installed at least one extraction device (20) for generating the coffee, an electronic control unit (40), a water supply (50) and a drawer (45) for collecting the coffee grounds, characterized in that
several modules, implemented independently of one another, are provided, which are disposed so as to be slidable into the housing frame (10) and comprise on the rear side at least one connector component (26, 27, 44, 55, 56), which in each instance in the slid-in state is coupled in corresponding manner with a corresponding connector component (26', 27', 44', 55', 56') in the housing frame via cables or lines.

2. Coffee machine according to claim 1, characterized in that the extraction device (20), the electronic control unit (40) as well as the hot-water supply (50) form each an independent module.

3. Coffee machine according to claim 1 or 2, characterized in that in the housing frame (10) in addition a unit (30) can be slid in as a further independent module, with which milk foam can be generated, which, together with coffee, can be drawn from an outlet head (60) disposed on the front of the housing frame (10).

4. Coffee machine according to one of claims 1 to 3, characterized in that the housing frame (10) comprises on the front a coverable opening and these modules can be slid independently of one another from the front to the connector components (26', 27', 44', 55', 56') in the rear wall (11) of the housing frame (10).

5. Coffee machine according to claim 4, characterized in that a control panel (65) is provided which is arrested in the operating position on the front side of the coffee machine and which is displaceable into a position (65') above the housing frame (10) in order to slide out the modules.

6. Coffee machine according to any one of the preceding claims, characterized in that the connector components (26', 56') are supported floatingly in the housing frame (10) with respect to the plane extending perpendicularly to the direction of plugging and which, with these corresponding connector components (26, 56) of the device (20) or of the hot-water supply (50) are implemented conically in the front for the satisfactory centering of the same.

7. Coffee machine according to any one of the preceding claims, characterized in that in the rear wall (11) of the housing frame (10) a cable channel (13) is provided, in which the cables and lines for the corresponding connections between the connector components (26', 27', 44', 55', 56') are disposed.

8. Coffee machine according to any one of the preceding claims, characterized in that into the housing frame can be slid a collecting container (45), which is placed underneath a piston/cylinder unit (25) of the device (20).

9. Coffee machine according to any one of the preceding claims, characterized in that the individual modules are retained on support sheets (21, 51) or the like, which form a bearing surface, that the components disposed on these can essentially be fastened one next to the other in a clearly laid-out configuration.

## Revendications

1. Machine à café présentant un châssis de boîtier (10), dans lequel peuvent être insérés au moins un dispositif d'extraction (20) permettant de générer le café, une unité de commande électronique (40), une alimentation en eau (50) et un tiroir (45) permettant de recueillir le marc de café, caractérisée en ce que sont prévus plusieurs modules conçus indépendamment les uns des autres, qui sont disposés de façon enfichable dans le châssis de boîtier (10) et présentent chacun sur leur face arrière au moins un élément de connexion (26, 27, 44, 55, 56), lequel est respectivement couplé, à l'état enfiché, à un élément de connexion correspondant (26', 27', 44', 55', 56') dans le châssis de boîtier (10), ces éléments de connexion étant reliés les uns aux autres de façon correspondante dans le châssis de boîtier par l'intermédiaire de câbles ou conduites.

2. Machine à café selon la revendication 1, caractérisée en ce que le dispositif d'extraction (20), l'unité de commande électronique (40) et l'alimentation en eau chaude (50) forment chacun un module indépendant.

3. Machine à café selon la revendication 1 ou 2, caractérisée en ce que dans le châssis de boîtier (10) peut en outre être enfiché un dispositif (30) en tant qu'autre module indépendant, avec lequel peut être générée de la mousse de lait, laquelle peut être prélevée avec le café depuis une tête de sortie (60) disposée contre la face avant du châssis de boîtier (10).

4. Machine à café selon l'une des revendications 1 à 3, caractérisée en ce que le châssis de boîtier (10) présente sur sa face avant une ouverture escamotable et en ce que ces modules sont enfichables indépendamment les uns des autres depuis la face avant jusqu'aux éléments de connexion (26', 27', 44', 55', 56') dans la paroi arrière (11) du châssis de boîtier (10).

5. Machine à café selon la revendication 4, caractérisée en ce qu'est prévu un panneau de commande (65), lequel est bloqué sur la face avant de la machine à café en position de service et peut être déplacé dans une position (65') se trouvant au-dessus du châssis de boîtier (10) pour extraire les modules.

6. Machine à café selon l'une des revendications précédentes, caractérisée en ce que les éléments de connexion (26', 56') sont disposés de façon flottante dans le châssis de boîtier (10) eu égard au plan s'étendant perpendiculairement à la direction d'enfichage, et sont conçus de façon conique à l'avant pour permettre un centrage sans problème de ceux-ci avec les éléments de connexion (26, 56) correspondants du dispositif (20) ou de l'alimentation en eau chaude (50).

7. Machine à café selon l'une des revendications précédentes, caractérisée en ce qu'est prévu dans la paroi arrière (11) du châssis de boîtier (10) un chemin de câbles (13), dans lequel les câbles et conduites prévus pour les connexions correspondantes sont disposés entre les éléments de connexion (26', 27', 44', 55', 56').

8. Machine à café selon l'une des revendications précédentes, caractérisée en ce qu'un bac de récupération (45) peut être enfiché dans le châssis de boîtier, celui-ci étant disposé sous une unité à piston/cylindre (25) du dispositif (20).

9. Machine à café selon l'une des revendications précédentes, caractérisée en ce que les différents modules sont maintenus sur des tôles de support (21, 51) ou équivalent, lesquelles forment une surface d'appui telle que les composants disposés sur celles-ci peuvent être fixés selon une disposition ordonnée essentiellement les uns à côté des autres.
